Europäisches Patentamt

European Patent Office

Office européen des brevets

(11) Numéro de publication: **0 076 770**
**A2**

# (12) DEMANDE DE BREVET EUROPEEN

(21) Numéro de dépôt: 82420139.6

(22) Date de dépôt: 30.09.82

(51) Int. Cl.³: **G 01 G 15/00**
**G 01 G 13/30**

---

(30) Priorité: 01.10.81 US 307510

(43) Date de publication de la demande:
13.04.83 Bulletin 83/15

(84) Etats contractants désignés:
AT BE CH DE FR GB IT LI LU NL SE

(71) Demandeur: SEPARATION SCIENCE CORPORATION
Suite E2 Montchanin Mills Building
Montchanin Delaware 19710(US)

(72) Inventeur: Rohde, Vernon R.
R3 Fairchild Road
Newton Connecticut 06470(US)

(74) Mandataire: Buttet, Roger et al,
"Cabinet Charras" 3, Place de l'Hôtel-de-Ville
F-42000 Saint-Etienne(FR)

---

(54) Contrôleur de poids.

(57) Le contrôleur de poids comporte un plateau prévu pour supporter un conteneur ou récipient. Dans un mode, le contrôleur est prévu pour émettre un signal lorsque le récipient a reçu un poids pré-sélectionné de produit. Dans un deuxième mode, le contrôleur est prévu pour émettre un signal lorsque le récipient a été vidé jusqu'à un poids pré-sélectionné.

FIG. I.

EP 0 076 770 A2

- 1 -

## Contrôleur de poids

On emploie souvent des bouteilles ou récipients de grande capacité pour du liquide résiduel, durant les travaux de laboratoire et les opérations chirurgicales. On place habituellement la bouteille ou conteneur sur le sol et le liquide résiduaire y est distribué par des conduits tubulaires appropriés. Si le conteneur est transparent, on peut l'observer lorsque rien n'obstrue la visualisation de ce dernier. Si pour diverses raisons, il n'est pas possible d'observer le conteneur ou récipient, celui-ci peut se remplir jusqu'à déborder, provoquant ainsi l'interruption possible d'une opération, dans l'attente de l'installation d'un autre récipient en position réceptrice.

Un des buts de l'invention est de prévoir un contrôleur de poids susceptible d'être placé sur le sol et conçu pour supporter un récipient de façon qu'à l'approche d'un certain niveau de poids, le contrôleur signale ce fait avant que le liquide ne déborde du récipient.

De même, certains travaux ou certaines opérations exigent une évacuation de liquide contenu dans un récipient.

Un autre but de l'invention est de prévoir un contrôleur de poids susceptible d'être placé sur le sol, sur un rayonnage ou sur une table de laboratoire, conçu de manière à émettre un signal approprié lorsque le récipient a atteint un niveau de poids inférieur pré-sélectionné.

Le contrôleur de poids selon la présente invention est conçu pour permettre la tenue d'un conteneur ou récipient sur un plateau réalisé à cet effet. Le plateau est supporté par un chariot présentant quatre points d'appui distants. Ce chariot est composé de deux parties ayant respectivement une configuration généralement en forme de Y et de U. Les extrémités des pieds respectifs portent sur les points d'appui distants. La branche arrière de la partie en forme de Y est associée à un interrupteur électrique prévu pour contrôler le passage du courant électrique dans un circuit approprié vers un ronfleur et/ou une lampe électrique installés sur le dispositif.

Le contrôleur de poids peut être employé pour indiquer, par le moyen de signalisation, si le poids dans le conteneur ou récipient, a atteint un point limite au-delà duquel le liquide peut déborder, de façon que le récipient plein puisse être remplacé par un récipient vide. Le dispositif peut également fonctionné selon un deuxième mode ; à cet effet, un récipient plein peut être installé sur le plateau, un produit habituellement liquide, pouvant être distribué à partir de ce récipient plein. Le dispositif peut être réglé de manière que, lorsque le récipient est vidé, un signal donne une information indiquant qu'un nouveau récipient plein doit être mis à la place du récipient vide.

L'invention est exposée ci-après, plus en détail, à l'aide des dessins.

La figure 1 représente une vue en perspective du contrôleur de poids selon la présente invention, le contrôleur étant vu de l'arrière.

La figure 2 représente une vue de côté du contrôleur.

La figure 3 représente une vue de face du contrôleur.

La figure 4 représente une vue en coupe prise le long de la ligne 4-4 de la figure 1.

La figure 5 représente une vue partielle à grande échelle, du

- 3 -
**0076770**

micro-interrupteur en position de fonctionnement.

La figure 6 représente une vue partielle à grande échelle, du micro-interrupteur dans une autre position de fonctionnement.

La figure 7 représente une vue en perspective éclatée, prise de l'avant, avec le plateau supérieur récepteur de poids enlevé.

Le contrôleur de poids selon la présente invention est désigné dans son ensemble par le repère 10. Il comporte une partie disposée horizontalement 11 et une partie formant boîtier 12, disposée verticalement. La partie disposée horizontalement inclut un plateau récepteur de poids, orienté en direction du haut, 13, pourvu sur sa périphérie d'une collerette 14 contribuant à retenir la charge. On a représenté sur le plateau un récipient creux 15 prévu pour recevoir un liquide à partir d'une source quelconque telle que l'effluent résultant de certaines opérations chirurgicales, comme indiqué non limitativement dans le préambule. Le conteneur ou récipient 15 peut être de tout type approprié tel qu'un verre ordinaire ou une bouteille plastique, et de dimensions appropriées permettant de le mettre facilement en place sur le plateau 13.

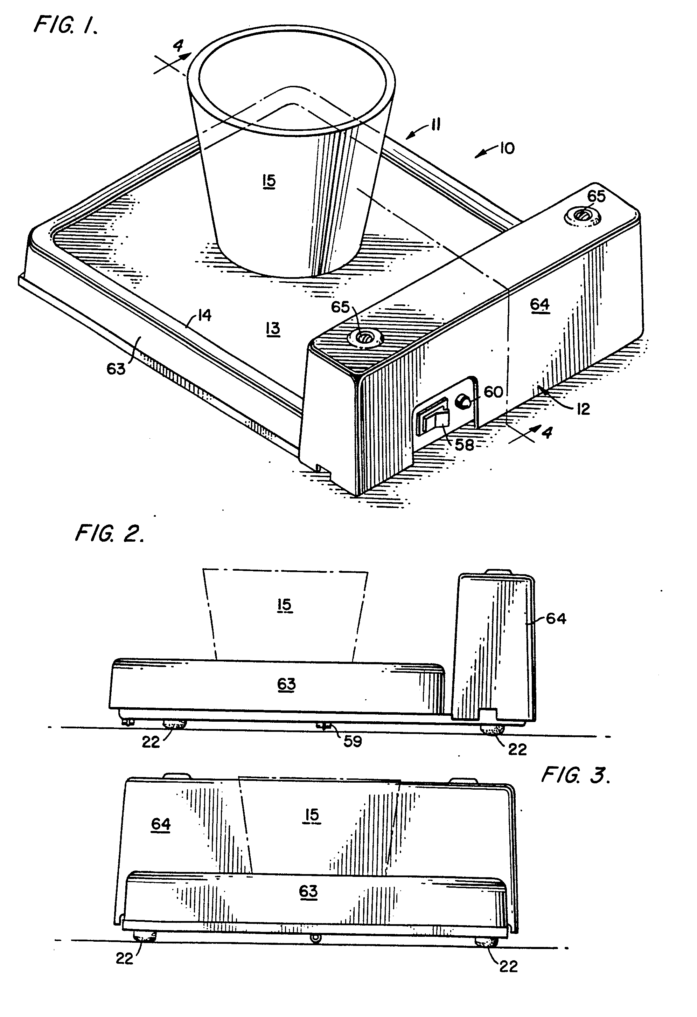

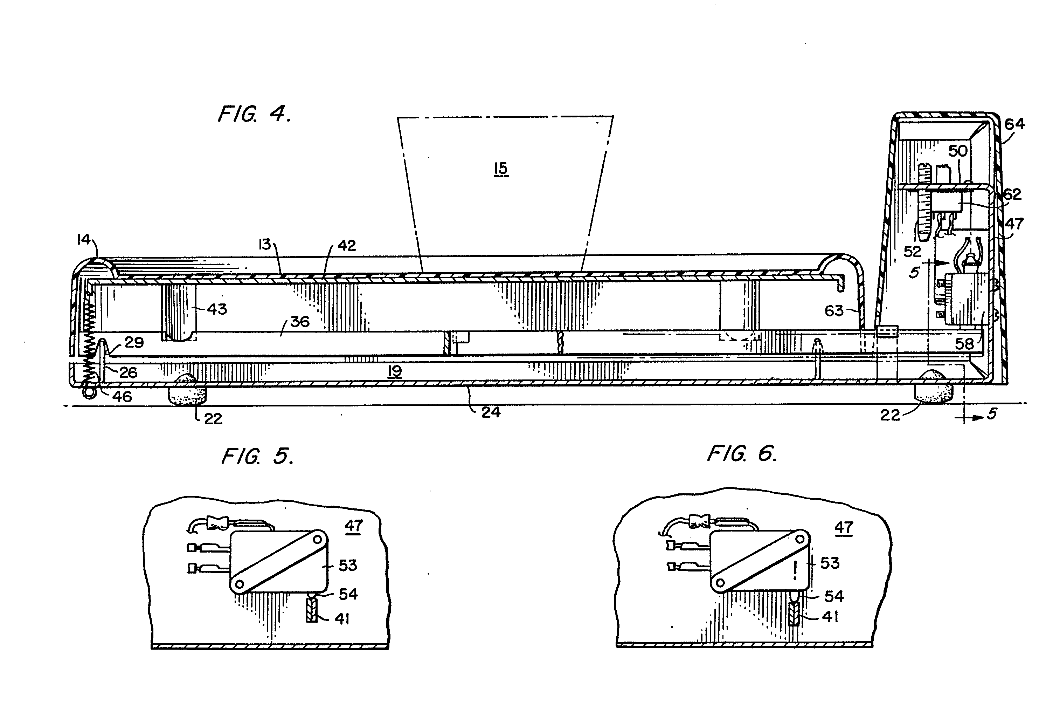

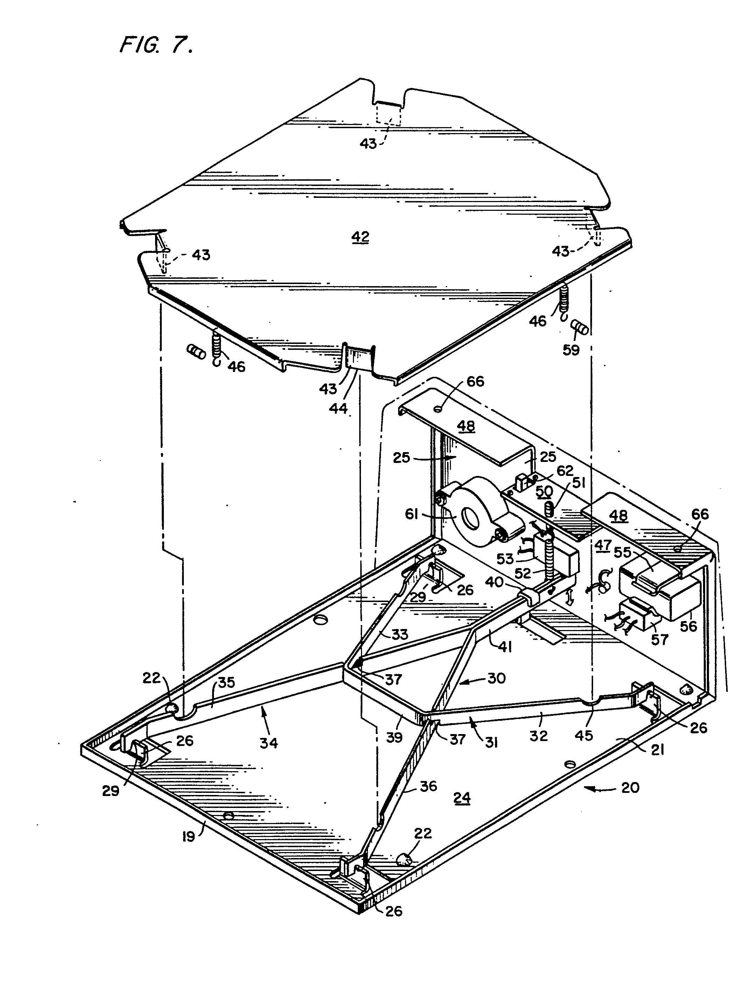

La partie disposée horizontalement 11 et la partie de boîtier verticale 12, sont fixées à un châssis 20 ayant généralement une configuration en forme de L. Les figures 1 à 3 permettent de discerner une partie du châssis. Les figures 4 et 7 font apparaître de façon beaucoup plus détaillée, les aspects spécifiques de la structure.

Le châssis en forme de L 20, est prévu et construit pour supporter les composants du dispositif.

La partie allongée 21 du châssis 20 est montée sur des pieds en caoutchouc, relativement petits, 22, solidaires du châssis en formant piètement, comme illustré aux figures 2, 3 et 4.

La partie allongée 21 comporte une portion profilée plane 24, délimitée périphériquement sur trois côtés par une paroi relativement basse 19 et sur le quatrième côté, par l'aile équerrée verticale 25 du châssis. La partie plane 24 présente approximativement vers ses angles, des oreilles verticales 26 découpées à partir de la portion plane et refoulées à partir de celle-ci. Chacun des bords respectifs orientés en direction du haut, est pourvu d'un bord de coupe.

Un chariot 30 prend appui de manière pivotante, sur les parties de bord s'étendant en direction du haut des oreilles. Le chariot se compose d'un premier élément 31 ayant une configuration en forme de U évasé, dont les ailes 32 - 33 prennent appui sur les oreilles 26, à l'arrière du châssis 20. Le deuxième élément 34 du chariot présente une configuration en forme de Y. La partie supérieure des ailes 35 et 36 porte, respectivement, sur les autres oreilles 26 positionnées à l'avant. Pour le contrôle du mouvement coulissant avant arrière, les différentes ailes sont pourvues de fentes en forme de V renversé, 29. Le contact entre le chariot et les oreilles a lieu au bord de coupe et aux sommets des fentes en forme de V.

La partie de pont 39 de l'élément en forme de U évasé du chariot 30, prend appui sur la partie en forme de Y 34 du chariot 30, grâce aux fentes d'engagement complémentaires 37 qui s'opposent également à un mouvement latéral. La chariot 30 est distant de la portion plane du châssis et son affaissement sur la portion plane est évité par un élément vertical en forme de J renversé, 40, retenant l'extrémité de queue 41 de l'élément en forme de Y 31. L'élément 40 en forme de J est découpé à partir de la portion plane 24 et déformé de manière appropriée, pour assurer la fonction indiquée.

Le chariot 30 reçoit une plaque 42 comportant quatre oreilles solidaires, s'étendant en direction du bas 43, découpées et déformées ensuite, de manière appropriée. Les oreilles 43 ont leurs bords directeurs orientés vers le bas 44, pour venir en position d'appui dans des creusures 45 positionnées de façon appropriée sur chacune des quatre jambes du chariot. La plaque 42 est tirée en direction du bas, par une pluralité de ressorts hélicoïdaux 46, chacun de ces ressorts ayant une extrémité fixée à la portion plane du châssis 24, et l'autre extrémité fixée de manière appropriée, à la plaque 42. La fixation
des ressorts 46 sur le châssis, est assurée par l'une de leurs
extrémités en boucle qui est introduite dans des trous 49,
puis fixée sur un axe 59, comme illustré figure 7.

La petite aile du châssis en forme de L comporte une paroi
bifurquée s'étendant en direction du haut 47. La paroi se
termine par deux rebords supérieurs s'étendant vers l'intérieur 48 et par un rebord inférieur 50 sur lequel est disposée une vis réglable 51. Une extrémité d'un ressort hélicoïdal 52 est fixée à ladite vis, tandis que son autre extrémité est fixée sur la partie d'extrémité de la queue 41 de
la partie en forme de Y du chariot. La partie de queue se
trouve ainsi poussée en direction du haut.

Un micro-interrupteur électrique 53 est monté contre la paroi 47 du châssis. La tige de commande 54 de l'interrupteur
présente une extrémité en butée avec la partie d'extrémité
supérieure de la queue 41 du chariot, ce qui permet de faire
fonctionner l'interrupteur. On attire l'attention sur les
figures 5 et 6, dans lesquelles le même interrupteur est représenté dans ses deux conditions de fonctionnement. Par
exemple, dans la position représentée figure 5, l'interrupteur peut être en position ouverte.Dans la partie représentée figure 6, l'interrupteur peut être en position fermée.
Cette dernière position est obtenue lorsque la plaque atteint
un poids présélectionné, supérieur à la poussée en direction
du haut de la queue 41 du chariot sous l'effet de tension du
ressort hélicoïdal 52. Le micro-interrupteur employé est
standard et peut être câblé pour fonctionner de manière appropriée.

Par ailleurs, on prévoit, montée sur la paroi du châssis, une
console asservie par ressort 55, pour la réception d'une
batterie 56 de 9 volts. En dessous, se trouve un moyen d'orientation de circuit 57, comportant un interrupteur 58 pouvant
être mis en action par l'arrière, comme illustré figure 1.
On a également prévu une lampe témoin 60. Un moyen de conduite électrique approprié, relie la batterie à un ronfleur 61, également monté sur la paroi arrière 47. Le courant électrique peut être coupé par l'interrupteur 58 et par le micro-interrupteur 53, ce dernier fonctionnant de la manière exposée. Un interrupteur sélecteur de mode 62 est monté sur le rebord inférieur 50 de la paroi 47. Son fonctionnement. sera exposé par la suite.

Le plateau 13 est monté sur la plaque 42 à l'aide de moyens appropriés. Ce plateau comporte sur sa périphérie, une jupe 63 interdisant la pénétration de la poussière et similaire dans les mécanismes fonctionnels. De même, la petite aile de l'élément en forme de L, est recouverte par un couvercle 64 maintenu solidement en place au moyen de deux vis 65 qui s'engagent dans deux ouvertures filetées 66, réalisées sur les rebords supérieurs 48 de la paroi dudit châssis.

Le chariot a été représenté comme comportant quatre points d'appui répartis largement distants et comprenant les oreilles mentionnées ci-avant. Dans un mode de fonctionnement, le récipient sur le chariot est chargé progressivement d'effluent et similaire, jusqu'à ce que la résistance du ressort 52 maintenant la queue de l'élément en forme de Y du chariot, soit surmontée, provoquant la descente de la partie de queue et dégageant ainsi la tige fonctionnelle asservie par ressort 54 du micro-interrupteur. De ce fait, le ronfleur 61 se fait entendre, et/ou la lampe signal s'éclaire. Lorsque le poids excédentaire a été enlevé, le chariot revient en position normale et le micro-interrupteur en position de circuit mode ouvert. L'interrupteur sélecteur de mode peut être mis en action, le micro-interrupteur se trouvant alors dans une position normalement fermée. Dans ce dernier réglage, c'est un récipient rempli de liquide qui est placé sur le plateau. De ce fait, la résistance du ressort 52 est surmontée, ce qui permet à la tige 54 de descendre et au micro-interrupteur de s'ouvrir. Lorsque le contenu du récipient est prélevé, le poids diminue, la résistance du ressort 52 n'est plus alors surmontée et la queue 41 du chariot agit sur la tige 54 pour fermer le micro-interrupteur 53, ce qui permet ainsi la communication électrique de la batterie au ronfleur. Au moyen de la vis de réglage 51 qui règle la tension sur le ressort 52, il est possible d'obtenir un signal donné à un point juste avant que le récipient ne soit vidé. On peut se rendre compte que le circuit peut être réglé de manière que la lampe témoin 60 soit allumée lorsque l'on met le dispositif en circuit. Cette lampe peut être employée de façon qu'elle fasse partie du système donnant l'alarme, ou bien elle peut être utilisée pour signaler que le système est en circuit et se trouve dans le mode approprié, c'est à dire sans trop de poids ou sans assez de poids.

Les éléments peuvent être réalisés en métal ou en une matière plastique bien rigide. Dans la pratique il a été constaté qu'il était très approprié de fabriquer en métal le châssis, la plaque et le chariot, ceci permettant d'obtenir d'excellentes caractéristiques de résistance. En ce qui concerne le couvercle 64 et le plateau 13, le mieux est de les prévoir en matière plastique moulée.

Un avantage considérable du dispositif de la présente invention réside dans le fait que le poids du récipient peut être placé en des points différents sur le plateau, sans diminuer de façon appréciable, la précision quantitative du dispositif. Lorsque l'on utilise un récipient de grande dimension, celui-ci peut être positionné en chevauchant les bords du plateau, toujours sans altération indésirable dans l'efficacité désirée.

Revendications.

**0076770**

1.Contrôleur de poids caractérisé en ce qu'il comprend : un support (20), un chariot planaire (30) pivotant, ledit chariot étant supporté par ledit support, un moyen planaire (42) positionné sur ledit chariot, ledit moyen planaire étant prévu et construit pour supporter un moyen (15) pouvant contenir un produit, ledit support comportant un interrupteur électrique (53), ledit support comportant en outre un moyen de signalisation à fonctionnement électrique, ledit interrupteur électrique, conjointement avec ledit moyen de signalisation à fonctionnement électrique, pouvant être relié à un moyen d'alimentation (56) d'énergie électrique, ledit interrupteur électrique étant prévu et construit pour couper le débit de courant électrique sur ledit moyen de signalisation, lorsque le contrôleur est utilisé dans un premier mode, et pour permettre le débit de courant électrique sur ledit moyen de signalisation, lorsque le contrôleur est utilisé dans un deuxième mode, ledit chariot planaire pivotant, comportant un moyen fonctionnel prévu et construit de façon à maintenir le dit interrupteur dans un mode, lorsque le poids sur ledit moyen planaire est en dessous d'une valeur pré-sélectionnée, et à maintenir ledit interrupteur dans ledit autre mode, lorsque le poids sur le moyen planaire est au dessus d'une valeur pré-sélectionnée, ces fluctuations de poids mettant en action ledit moyen de signalisation.

2. Contrôleur de poids selon 1, caractérisé en ce que le support (20) comporte quatre moyens (26) de points d'appui verticaux distants, lesdits moyens de points d'appui étant prévus et construits pour supporter pivotant ledit chariot (30).

3. Contrôleur de poids selon 2, caractérisé en ce que le chariot (30) pivotant, comprend une construction de châssis incluant quatre jambes (32 - 33 - 35 - 36) prévues et construites chacune pour être supportées pivotantes sur les moyens de points d'appui (26).

4. Contrôleur de poids selon 3, caractérisé en ce que ladite construction de châssis comprend deux parties, une première

0076770

partie ayant une configuration en forme de Y (34) et présentant de ce fait, deux jambes (35 - 36) s'étendant rigoureusement dans une direction similaire, et une queue (41) s'étendant dans une autre direction, lesdites jambes étant prévues et construites pour être supportées par deux des moyens de points d'appui verticaux (26), un moyen (52) étant prévu et construit de façon à pousser la queue en direction du haut, celle-ci constituant le moyen de fonctionnement pour faire actionner l'interrupteur (53); et une deuxième partie (31) ayant une configuration en forme de U et présentant deux jambes (32 - 33) s'étendant rigoureusement dans une direction similaire et semblable à ladite queue (41), ladite deuxième partie comportant un élément transversal (39) reliant les dites jambes (32 - 33), ladite deuxième partie étant supportée par ladite première partie, ladite queue du châssis étant ainsi rendue sensible aux changements de poids, dans rigoureusement tout emplacement sur ledit châssis.

5. Contrôleur de poids selon 1, caractérisé en ce que le support comporte une paroi verticale (25) à une extrémité, le moyen de signalisation à fonctionnement électrique et l'interrupteur électrique (53) étant montés sur ladite paroi, laquelle est recouverte par un boîtier (64).

6. Contrôleur de poids selon 5, caractérisé en ce que le moyen planaire (42) comporte une pluralité d'oreilles (43) s'étendant en direction du bas, prévues et conçues pour prendre appui sur le chariot pivotant planaire (30).

7. Contrôleur de poids selon 6, caractérisé en ce que le moyen planaire (42) est poussé en direction du bas par un moyen élastique (46) fixé au moyen planaire et au support (20).

8. Contrôleur de poids selon 7, caractérisé en ce que le moyen planaire (42) comprend un boîtier comportant une jupe solidaire, prévu et construit pour loger le chariot.

9. Contrôleur de poids selon 8, caractérisé en ce que le moyen de signalisation à fonctionnement électrique comprend un moyen producteur de son (61).

10. Contrôleur de poids selon 8, caractérisé en ce que le moyen de signalisation à fonctionnement électrique comprend un moyen producteur de lumière (60).

11. Contrôleur de poids selon 9 et 10, caractérisé en ce que le moyen de fourniture d'énergie électrique (56) est une batterie montée sur la paroi verticale (25).

12. Contrôleur de poids selon 7, caractérisé en ce que le support comporte quatre moyens de points d'appui verticaux distants, lesdits moyens de points d'appui étant prévus et construits pour supporter pivotant ledit chariot.

13. Contrôleur de poids selon 12, caractérisé en ce que le chariot pivotant comprend une construction de châssis incluant quatre jambes, prévues et construites chacune pour être supportées pivotantes sur les moyens de points d'appui.

14. Contrôleur de poids selon 13, caractérisé en ce que la dite construction de châssis comprend deux parties, une première partie ayant une configuration en forme de Y et présentant de ce fait deux jambes s'étendant rigoureusement dans une direction similaire et une queue s'étendant dans une autre direction, les dites jambes étant prévues et construites pour être supportées par deux desdits moyens de points d'appui verticaux, un moyen étant prévu et construit pour pousser ladite queue en direction du haut, ladite queue définissant ledit moyen de fonctionnement pour faire fonctionner ledit interrupteur; et la deuxième partie ayant une configuration en forme de U et présentant de ce fait, deux jambes s'étendant rigoureusement dans une direction similaire et semblable à celle de la queue, ladite deuxième partie comportant un élément transversal reliant lesdites jambes, ladite deuxième partie étant supportée par la première partie, ladite queue du châssis étant ainsi rendue sensible aux changements de poids, dans rigoureusement tout emplacement sur ledit châssis.

FIG. 1.

15

11

10

65

4

65

64

14

13

63

60

12

58

4

FIG. 2.

15

64

63

22

59

22

FIG. 3.

64

15

63

22

22

FIG. 4.

FIG. 5.

FIG. 6.

FIG. 7.